# EUROPEAN PATENT APPLICATION

(11) **EP 4 269 469 A1**
(43) Date of publication of application: **01.11.2023**
(21) Application number: 21911407.1
(22) Date of filing: 17.12.2021
(51) Int. Cl.: C08G 69/36, C08L 77/06, C08L 23/16, C08K 5/00

(54) **PROCESS FOR PREPARING POLYAMIDE BY COPOLYMERIZATION OF MULTIPLE COMPONENTS, POLYAMIDE PREPARED THEREBY, AND COMPOSITION COMPRISING SAME**

(30) Priority: 24.12.2020 KR 20200183538
(71) Applicant: Hanwha Solutions Corporation, Jung-gu Seoul 04541 (KR)
(72) Inventor: JEONG, Minjae, Daejeon 34128 (KR); LEE, Jinseo, Daejeon 34128 (KR); KIM, Dokyoung, Daejeon 34128 (KR); KWON, Kyungho, Daejeon 34128 (KR); SEO, Do Hyun, Daejeon 34128 (KR)
(74) Representative: Berggren Oy
(86) International application number: PCT/KR2021/019248
(87) International publication number: WO 2022/139340

(57) **Abstract**

The present disclosure relates to a method of preparing a polyamide by copolymerization of multiple components, a polyamide prepared thereby, and a composition including the same. The copolymerized polyamide according to an embodiment of the present invention and a composition including the same may exhibit excellent mechanical properties, low temperature properties, and gas barrier properties.

## Description

### [Technical Field]

The present invention relates to a method of preparing a polyamide by copolymerization of multiple components, a polyamide prepared thereby, and a composition including the same. Particularly, the present invention relates to a method of preparing a polyamide by copolymerization of a low-molecular-weight polyamide salt and lactam or α,ω-aminocarboxylic acid, a polyamide prepared thereby, and a composition including the same.

### [Background Art]

Polyamide refers to a polymer containing amide (-CO-NH-) units in the main chain. Polyamide is prepared from two different difunctional monomeric units, each containing two identical reactive groups (e.g., -NH₂ or -COOH), or from one difunctional monomeric unit, each containing one amino group and one carboxyl group or capable of forming these groups. For example, polyamide may be prepared by a condensation polymerization reaction of diamine and dicarboxylic acid, by a condensation polymerization reaction of aminocarboxylic acid, or by a ring-opening polymerization of lactam.

Polyamides may be classified into aliphatic polyamides, aromatic polyamides, and cycloaliphatic polyamides according to their molecular structures. Polyamides exhibit excellent physical properties in terms of stiffness, friction resistance, abrasion resistance, oil resistance, solvent resistance, etc., according to their molecular structures.

On the other hand, there was an attempt to supplement physical properties of respective polyamides by blending two polyamides which exhibit different properties from each other. For example, in Korea Patent Application No. 10-2012-0034742, a molded article having an excellent elastic modulus was manufactured by blending two polyamides of PA MXD. 10 and PA 6.10 in an extruder. However, since these two polyamides are not completely chemically bound, there has been a limitation in reducing the processing temperature or in improving low-temperature properties.

### [Disclosure]

### [Technical Problem]

There are provided a method of preparing a polyamide by copolymerization of multiple components, a copolymerized polyamide prepared thereby, which exhibits excellent physical properties, and a composition including the same.

### [Technical Solution]

According to one embodiment of the present invention to achieve the above objects, there is provided a method of preparing a copolymerized polyamide, the method including the steps of (1) preparing a polyamide salt by condensation polymerization of diamine and dicarboxylic acid; and (2) copolymerizing the polyamide salt with lactam or α,ω-aminocarboxylic acid, wherein an equivalent ratio of diamine to dicarboxylic acid is 1.05 to 1.0, and a molar ratio of lactam or α,ω-aminocarboxylic acid to the polyamide salt is 96:4 to 50:50.

In a specific embodiment of the present invention, in the step (1), the dicarboxylic acid may include at least one of an aliphatic dicarboxylic acid selected from the group consisting of oxalic acid, malonic acid, succinic acid, glutaric acid, adipic acid, pimelic acid, suberic acid, azelaic acid, sebacic acid, undecane diacid, dodecane diacid, tridecane diacid, tetradecane diacid, pentadecane diacid, hexadecane diacid, heptadecane diacid, and octadecane diacid; a cycloaliphatic dicarboxylic acid selected from the group consisting of cyclohexane dicarboxylic acids; and an aromatic dicarboxylic acid selected from the group consisting of phthalic acid, isophthalic acid, terephthalic acid, and naphthalene dicarboxylic acid. Preferably, the dicarboxylic acid may be sebacic acid.

In a specific embodiment of the present invention, in the step (1), the diamine may include at least one of an aliphatic diamine selected from the group consisting of ethylenediamine, 1,3-diaminopropane, 1,4-diaminobutane, 1,5-diaminopentane, 1,6-diaminohexane, 1,7-diaminoheptane, 1,8-diaminooctane, 1,9-diaminononane, 1,10-diaminodecane, 1,11-diaminoundecane, 1,12-diaminododecane, 1,13-diaminotridecane, 1,14-diaminotetradecane, 1,15-diaminopentadecane, 1,16-diaminohexadecane, 1,17-diaminoheptadecane, 1,18-diaminooctadecane, 1,19-diaminononadecane, 1,20-diaminoicosane, and 2-methyl-1,5-diaminopentane; a cycloaliphatic diamine selected from the group consisting of cyclohexane diamine and bis-(4-aminocyclohexyl)methane; and an aromatic diamine such as xylene diamine. Preferably, the diamine may be m-xylenediamine.

In a specific embodiment of the present invention, the condensation polymerization of the step (1) may be performed at a temperature of 150°C to 200°C for 1 hour to 3 hours.

In a specific embodiment of the present invention, the polyamide salt obtained in the step (1) may have a relative viscosity (sulfuric acid) of 1 to 2.

In a specific embodiment of the present invention, in the step (2), the lactam may have at least one selected from the group consisting of laurolactam, caprolactam, piperidinone, pyrrolidone, enantolactam, capryllactam, propiolactam, valerolactam, heptanolactam, octanolactam, nonanolactam, decanolactam, undecanolactam, and dodecanolactam. Preferably, the lactam may be caprolactam.

In a specific embodiment of the present invention, in the step (2), the α,ω-aminocarboxylic acid may have at least one selected from the group consisting of aminocaproic acid, 7-aminoheptanoic acid, 11-aminoundecanoic acid, and 12-aminododecanoic acid.

In a specific embodiment of the present invention, the copolymerization of the step (2) may be performed in the presence of a phosphorus-based compound as a thermal stabilizer and catalyst. More specifically, the phosphorus-based compound may be a hypophosphorous acid compound or a phosphorous acid compound.

In a specific embodiment of the present invention, the copolymerization of the step (2) may include a first copolymerization which is performed at a pressure of 1 bar to 5 bar and a temperature of 250°C to 300°C for 1 hour to 3 hours, and a second copolymerization which is performed at a pressure of 0.001 bar to 0.5 bar and a temperature of 200°C to 300°C for 0.1 hour to 12 hours.

According to another embodiment of the present disclosure, there is provided a copolymerized polyamide which is prepared by the above preparation method, the copolymerized polyamide including (a) a first structural unit derived from lactam or α,ω-aminocarboxylic acid; (b) a second structural unit derived from aromatic diamine or aromatic dicarboxylic acid; and (c) a third structural unit derived from an aliphatic or cycloaliphatic diamine having 10 or more carbon atoms or an aliphatic or cycloaliphatic dicarboxylic acid having 10 or more carbon atoms, wherein the content of the first structural unit is 50 mol% to 96 mol%, and the total content of the second structural unit and the third structural unit is 4 mol% to 50 mol%.

In a specific embodiment of the present invention, the copolymerized polyamide may further include (d) a fourth structural unit derived from an aliphatic or cycloaliphatic diamine having 2 to 9 carbon atoms or an aliphatic or cycloaliphatic dicarboxylic acid having 2 to 9 carbon atoms.

In a specific embodiment of the present invention, the copolymerized polyamide may have a relative viscosity (sulfuric acid) of 2.0 to 5.0.

According to still another embodiment of the present invention, there is provided a copolymerized polyamide composition including (A) 4% by weight to 50% by weight of the copolymerized polyamide according to an embodiment of the present invention; (B) 50% by weight to 96% by weight of homopolyamide prepared from lactam or α,ω-aminocarboxylic acid; and (C) 0% by weight to 20% by weight of an impact modifier.

In a specific embodiment of the present invention, the impact modifier (C) may include at least one selected from the group consisting of maleic anhydride-grafted ethylene-propylene rubber, ethylene-1-butene rubber, ethylene-butylene rubber, ethylene-1-pentene rubber, ethylene-1-hexene rubber, ethylene-1-heptene rubber, ethylene-1-octene rubber, and ethylene-4-methyl-1-pentene rubber. Preferably, the impact modifier (C) may be maleic anhydride-grafted ethylene-butylene rubber.

In a specific embodiment of the present invention, the polyamide composition may further include an additive (D) in an amount of 3 parts by weight or less with respect to 100 parts by weight of the components (A) to (C).

In this regard, the additive (D) may include at least one selected from the group consisting of an antioxidant, a thermal stabilizer, a neutralizer, a weathering stabilizer, an antistatic agent, a lubricant, a slip agent, a pigment, and a dye.

In a specific embodiment, the additive (D) may include a phenolic antioxidant, butylated hydroxytoluene (BHT), a first antioxidant selected from Irganox 1098, Irganox 1076, Irganox 1010 and Irganox 3114, a second antioxidant Irgafos 168, and a thermal stabilizer sodium hypophosphite (Na₂H₂PO₂).

According to still another embodiment of the present invention, there is provided a copolymerized polyamide molded article which is manufactured by molding the copolymerized polyamide or the copolymerized polyamide composition.

In a specific embodiment, the copolymerized polyamide molded article may be for automotive parts, environmental materials, tank liners, containers, building materials, electrical and electronic parts, aerospace/aviation, drones, foods and functional packaging, housings, and energy materials.

### [Effect of the Invention]

A copolymerized polyamide according to an embodiment of the present invention and a composition including the same may exhibit excellent mechanical properties, low temperature properties, and gas barrier properties.

### [Best Mode for Carrying Out the Invention]

Hereinafter, the present invention will be described in more detail.

### Method of preparing copolymerized polyamide

A method of preparing a copolymerized polyamide according to one embodiment of the present invention includes the steps of (1) preparing a polyamide salt by condensation polymerization of diamine and dicarboxylic acid; and (2) copolymerizing the polyamide salt with lactam or α,ω-aminocarboxylic acid, wherein an equivalent ratio of diamine to dicarboxylic acid is 1.05 to 1.0, and a molar ratio of lactam or α,ω-aminocarboxylic acid to the polyamide salt is 96:4 to 50:50.

### Step (1)

In the step (1), a polyamide salt is prepared by condensation polymerization of diamine and dicarboxylic acid.

First, dicarboxylic acid, which is one of the monomers for preparing the polyamide salt, is melted after being charged in a solid state into a reactor, or is melted in advance in a separate melting tank, and then a predetermined amount thereof is charged into the reactor.

Here, the reactor used for preparing the polyamide salt is not particularly limited, but it may be a stirred tank-reactor equipped with a stirrer. Here, the type of the stirrer is not particularly limited as long as it is able to sufficiently stir the reaction mixture of diamine and dicarboxylic acid. In a specific embodiment of the present invention, the stirrer may be a helical ribbon type or an anchor type.

In a specific embodiment of the present invention, examples of the dicarboxylic acid used in the preparation of the polyamide salt may include an aliphatic dicarboxylic acid selected from the group consisting of oxalic acid, malonic acid, succinic acid, glutaric acid, adipic acid, pimelic acid, suberic acid, azelaic acid, sebacic acid, undecane diacid, dodecane diacid, tridecane diacid, tetradecane diacid, pentadecane diacid, hexadecane diacid, heptadecane diacid, and octadecane diacid; a cycloaliphatic dicarboxylic acid selected from the group consisting of cyclohexane dicarboxylic acids; and an aromatic dicarboxylic acid selected from the group consisting of phthalic acid, isophthalic acid, terephthalic acid, and naphthalene dicarboxylic acid, but are not particularly limited thereto. Preferably, the dicarboxylic acid may be sebacic acid.

While stirring the molten dicarboxylic acid in the reactor with a stirrer, the inside of the reactor is sufficiently purged by providing an inert gas such as nitrogen through a purge line.

Thereafter, the temperature in the reactor is heated to a temperature of 150°C to 200°C at which the amidation reaction actually occurs. Specifically, the temperature in the reactor is set such that the polyamide salt as a product is maintained in a molten state during addition of diamine, in order to ensure uniform fluidity in the entire reaction system.

Subsequently, diamine, which is the other of the monomers for preparing the polyamide salt, is continuously or intermittently added into the reactor. At this time, diamine may be introduced into the reactor from a diamine supply tank using a metering pump. Here, the specific type and configuration of the diamine supply tank and the metering pump are not particularly limited as long as they are able to supply diamine to the reactor in a predetermined amount.

In a specific embodiment of the present invention, examples of the diamine used in the preparation of the polyamide salt may include an aliphatic diamine selected from the group consisting of ethylenediamine, 1,3-diaminopropane, 1,4-diaminobutane, 1,5-diaminopentane, 1,6-diaminohexane, 1,7-diaminoheptane, 1,8-diaminooctane, 1,9-diaminononane, 1,10-diaminodecane, 1,11-diaminoundecane, 1,12-diaminododecane, 1,13-diaminotridecane, 1,14-diaminotetradecane, 1,15-diaminopentadecane, 1,16-diaminohexadecane, 1,17-diaminoheptadecane, 1,18-diaminooctadecane, 1,19-diaminononadecane, 1,20-diaminoicosane, and 2-methyl-1,5-diaminopentane; a cycloaliphatic diamine selected from the group consisting of cyclohexane diamine and bis-(4-aminocyclohexyl)methane; and an aromatic diamine such as xylene diamine, but are not limited thereto. Preferably, the diamine may be m-xylenediamine.

The diamine is preferably added for 0.5 to 4 hours such that the reaction may slowly occur while maintaining the reaction mixture in a molten state.

In a specific embodiment of the present invention, in the step (1), an equivalent ratio of diamine to dicarboxylic acid is 1.05 to 1.0. When the equivalent ratio of diamine to dicarboxylic acid is within this range, the condensation polymerization may be appropriately performed.

The temperature in the reactor is preferably controlled such that the temperature in the reactor is 150°C to 250°C when the diamine is completely added. At this time, since the temperature raising rate in the reactor is determined by the heat of amidation reaction, the latent heat of evaporation of the condensation water, the amount of heat supplied, etc., the addition speed of the diamine is preferably controlled so that the temperature in the reactor at the completion of the diamine addition is within the above range.

In a specific embodiment of the present invention, the condensation polymerization of the step (1) may be performed at a temperature of 150°C to 250°C for 1 hour to 3 hours.

In a specific embodiment of the present invention, the polyamide salt obtained in the step (1) may have a relative viscosity (sulfuric acid) of 1 to 2. When the relative viscosity of the polyamide salt is within this range, copolymerization in the step (2) may be appropriately performed.

The polyamide salt obtained in the step (1) may be sufficiently washed with an ethanol solvent to remove unreacted monomers, filtered using a filter paper or filter, and then dried in a vacuum oven at about 50°C.

### Step (2)

In the step (2), a copolymerized polyamide is prepared by copolymerization of the polyamide salt with lactam or α,ω-aminocarboxylic acid.

The polyamide salt prepared in the step (1) is charged into the reactor, together with lactam or α,ω-aminocarboxylic acid monomer, and optionally, a phosphorus-based compound as a thermal stabilizer and catalyst.

The copolymerization in the step (2) may be carried out in the reactor used in the step (1) or in a separate reactor.

In a specific embodiment of the present invention, the lactam used in the preparation of the copolymerized polyamide may be lactam having 3 to 20 carbon atoms. Examples of the lactam may include laurolactam, caprolactam, piperidinone, pyrrolidone, enantolactam, capryllactam, propiolactam, valerolactam, heptanolactam, octanolactam, nonanolactam, decanolactam, undecanolactam, and dodecanolactam, but are not particularly limited thereto. Preferably, the lactam may be caprolactam.

In a specific embodiment of the present invention, α,ω-aminocarboxylic acid may be used instead of lactam in the preparation of the copolymerized polyamide. In this regard, examples of α,ω-aminocarboxylic acid may include aminocaproic acid, 7-aminoheptanoic acid, 11-aminoundecanoic acid, and 12-aminododecanoic acid, but are not particularly limited thereto.

In a specific embodiment of the present invention, in the step (2), the molar ratio of lactam or α,ω-aminocarboxylic acid to the polyamide salt is 96:4 to 50:50. When the molar ratio of lactam or α,ω-aminocarboxylic acid to the polyamide salt is within this range, the copolymerized polyamide may exhibit excellent physical properties.

In a specific embodiment of the present invention, the copolymerization of the step (2) may be performed in the presence of a phosphorus-based compound as a thermal stabilizer and catalyst. Here, the phosphorus-based compound acts as a thermal stabilizer to prevent discoloration of the resulting copolymerized polyamide, while acting as a catalyst to increase the degree of polymerization of the resulting copolymerized polyamide.

The phosphorus-based compound may be a hypophosphorous acid compound (also referred to as a phosphinic acid compound or a phosphonous acid compound) or a phosphorous acid compound (also referred to as a phosphonic acid compound), but is not particularly limited thereto. The phosphorus-based compound may be a metal salt or an alkali metal salt.

Examples of the hypophosphorous acid compound may include hypophosphorous acid; metal salts of hypophosphorous acid such as sodium hypophosphite, potassium hypophosphite, lithium hypophosphite, etc.; hypophosphorous acid compounds such as ethyl hypophosphite, dimethylphosphinic acid, phenylmethylphosphinic acid, phenylphosphonous acid, ethyl phenylphosphonite, etc.; metal salts of phenylaphosphonic acid such as sodium phenylphosphonite, potassium phenylphosphonite, lithium phenylphosphonite, etc.

Specific examples of the phosphorous acid compound may include phosphorous acid, pyrophosphorous acid; metal salts of phosphorous acid such as sodium hydrogen phosphite, sodium phosphite, etc.; phosphorous acid compounds such as triethylphosphite, triphenylphosphite, ethylphosphonate, phenylphosphonate, diethyl phenylphosphinate, etc.; metal salts of phenylphosphonate such as sodium ethylphosphonate, potassium ethylphosphonate, sodium phenylphosphinate, potassium phenylphosphinate, lithium phenylphosphinate, etc.

Preferably, the phosphorus-based compound may be sodium hypophosphite (Na₂H₂PO₂).

The content of the phosphorus-based compound may be 0.3% by weight to 1.0% by weight, preferably 0.5% by weight to 0.7% by weight, based on the theoretical total weight of the polymer obtained after polymerization.

After all the raw materials for copolymerization are filled in the reactor, the inside of the reactor is sufficiently purged by supplying an inert gas such as nitrogen through a purge line.

In a specific embodiment of the present invention, the copolymerization of the step (2) may include a first copolymerization and a second copolymerization.

Here, the first copolymerization is a step of obtaining a low-viscosity polyamide by performing the condensation polymerization in a state where the reactants are melted.

Specifically, the first copolymerization may be performed at a pressure of 1 bar to 5 bar and a temperature of 250°C to 300°C for 1 hour to 3 hours.

The second copolymerization is a step of obtaining a higher-viscosity polyamide by polymerizing the low-viscosity polyamide in a melt or solid state under reduced pressure conditions.

Specifically, the second copolymerization may be performed at a pressure of 0.001 bar to 0.5 bar and a temperature of 200°C to 300°C for 0.1 hour to 12 hours.

### Copolymerized polyamide

The copolymerized polyamide according to an embodiment of the present invention is prepared by the above preparation method, and includes (a) a first structural unit derived from lactam or α,ω-aminocarboxylic acid; (b) a second structural unit derived from aromatic diamine or aromatic dicarboxylic acid; and (c) a third structural unit derived from an aliphatic or cycloaliphatic diamine having 10 or more carbon atoms or an aliphatic or cycloaliphatic dicarboxylic acid having 10 or more carbon atoms, wherein the content of the first structural unit is 50 mol% to 96 mol%, and the total content of the second structural unit and the third structural unit is 4 mol% to 50 mol%.

In a specific embodiment of the present invention, since the copolymerized polyamide is prepared by the preparation method according to an embodiment of the present invention, it may include all of the structural unit formed by condensation polymerization of diamine and dicarboxylic acid in the step (1), and the structural unit formed by polymerization of lactam or α,ω-aminocarboxylic acid in the step (2) of the preparation method according to an embodiment of the present invention.

Specifically, the first structural unit of the copolymerized polyamide is derived from lactam or α,ω-aminocarboxylic acid. Here, the lactam and α,ω-aminocarboxylic acid are as described in the method of preparing the copolymerized polyamide.

In the copolymerized polyamide, the content of the first structural unit is 50 mol% to 96 mol%. When the content of the first structural unit is within this range, the copolymerized polyamide may exhibit excellent physical properties.

Further, the second structural unit of the copolymerized polyamide is derived from aromatic diamine or aromatic dicarboxylic acid. Here, the aromatic diamine and aromatic dicarboxylic acid are as described in the method of preparing the copolymerized polyamide. Specifically, the aromatic diamine may include xylene diamine, and the aromatic dicarboxylic acid may include phthalic acid, isophthalic acid, terephthalic acid, or naphthalene dicarboxylic acid.

Further, the third structural unit of the copolymerized polyamide is derived from aliphatic or cycloaliphatic diamine having 10 or more carbon atoms or aliphatic or cycloaliphatic dicarboxylic acid having 10 or more carbon atoms. Here, the aliphatic or cycloaliphatic diamine having 10 or more carbon atoms and the aliphatic or cycloaliphatic dicarboxylic acid having 10 or more carbon atoms are as described in the method of preparing the copolymerized polyamide.

Specifically, the aliphatic or cycloaliphatic diamine having 10 or more carbon atoms may include 1,10-diaminodecane, 1,11-diaminoundecane, 1,12-diaminododecane, 1,13-diaminotridecane, 1,14-diaminotetradecane, 1,15-diaminopentadecane, 1,16-diaminohexadecane, 1,17-diaminoheptadecane, 1,18-diaminooctadecane, 1,19-diaminononadecane, 1,20-diaminoicosane, 2-methyl-1,5-diaminopentane, or bis-(4-aminocyclohexyl)methane, and the aliphatic or cycloaliphatic dicarboxylic acid having 10 or more carbon atoms may include sebacic acid, undecane diacid, dodecane diacid, tridecane diacid, tetradecane diacid, pentadecane diacid, hexadecane diacid, heptadecane diacid, or octadecane diacid.

In the copolymerized polyamide, the total content of the second structural unit and the third structural unit is 4 mol% to 50 mol%. When the total content of the second structural unit and the third structural unit is within this range, the copolymerized polyamide may exhibit excellent physical properties.

In a specific embodiment of the present invention, the copolymerized polyamide may further include (d) a fourth structural unit derived from an aliphatic or cycloaliphatic diamine having 2 to 9 carbon atoms or an aliphatic or cycloaliphatic dicarboxylic acid having 2 to 9 carbon atoms. Here, the aliphatic or cycloaliphatic diamine having 2 to 9 carbon atoms or the aliphatic or cycloaliphatic dicarboxylic acid having 2 to 9 carbon atoms are as described in the method of preparing the copolymerized polyamide.

Specifically, the aliphatic or cycloaliphatic diamine having 2 to 9 carbon atoms may include ethylenediamine, 1,3-diaminopropane, 1,4-diaminobutane, 1,5-diaminopentane, 1,6-diaminohexane, 1,7-diaminoheptane, 1,8-diaminooctane, 1,9-diaminononane, or cyclohexane diamine, and the aliphatic or cycloaliphatic dicarboxylic acid having 2 to 9 carbon atoms may include oxalic acid, malonic acid, succinic acid, glutaric acid, adipic acid, pimelic acid, suberic acid, azelaic acid or cyclohexane dicarboxylic acid.

The content of the fourth structural unit in the copolymerized polyamide may be 20 mol% or less.

In a specific embodiment of the present invention, the copolymerized polyamide may have a relative viscosity (sulfuric acid) of 2.0 to 5.0. When the relative viscosity of the copolymerized polyamide is within this range, the copolymerized polyamide may exhibit excellent physical properties.

### Copolymerized polyamide composition

The copolymerized polyamide composition according to an embodiment of the present invention includes (A) 4% by weight to 50% by weight of the copolymerized polyamide according to an embodiment of the present invention; (B) 50% by weight to 96% by weight of homopolyamide prepared from lactam or α,ω-aminocarboxylic acid; and (C) 0% by weight to 20% by weight of an impact modifier.

The copolymerized polyamide composition according to an embodiment of the present invention includes the copolymerized polyamide (A) according to an embodiment of the present invention. Here, the copolymerized polyamide (A) is as described in the copolymerized polyamide.

The content of the copolymerized polyamide (A) in the copolymerized polyamide composition is 4% by weight to 50% by weight. When the content of the copolymerized polyamide (A) is within the above range, the composition may exhibit excellent physical properties.

The copolymerized polyamide composition according to an embodiment of the present invention includes homopolyamide (B) prepared from lactam or α,ω-aminocarboxylic acid. Here, the type and preparation method of the homopolyamide (B) are not particularly limited, as long as it is prepared from lactam or α,ω-aminocarboxylic acid. The lactam and α,ω-aminocarboxylic acid are as described in the method of preparing the copolymerized polyamide.

The content of the homopolyamide (B) in the copolymerized polyamide composition is 50% by weight to 96% by weight. When the content of the homopolyamide (B) is within the above range, the composition may exhibit excellent physical properties.

Further, the copolymerized polyamide composition according to an embodiment of the present invention may further include an impact modifier (C).

In a specific embodiment of the present invention, the impact modifier (C) may be a maleic anhydride-grafted thermoplastic elastomer. More specifically, the impact modifier (C) may include at least one selected from the group consisting of a maleic anhydride-grafted ethylene-propylene rubber, ethylene-1-butene rubber, ethylene-butylene rubber, ethylene-1-pentene rubber, ethylene-1-hexene rubber, ethylene-1-heptene rubber, ethylene-1-octene rubber and ethylene-4-methyl-1-pentene rubber. Preferably, the impact modifier (C) may be a maleic anhydride-grafted ethylene-butylene rubber.

The content of maleic anhydride in the maleic anhydride-grafted thermoplastic elastomer may be 0.1% by weight to 1% by weight.

The content of the impact modifier (C) in the copolymerized polyamide composition is 0% by weight to 20% by weight.

In a specific embodiment of the present invention, the copolymerized polyamide composition may further include an additive (D) in an amount of 3 parts by weight or less, based on 100 parts by weight of components (A) to (C). In this regard, the additive (D) may include at least one selected from the group consisting of an antioxidant, a thermal stabilizer, a neutralizer, a weathering stabilizer, an antistatic agent, a lubricant, a slip agent, a pigment, and a dye.

In one exemplary embodiment, the additive (D) may include at least one antioxidant selected from a phenolic antioxidant, BHT (butylated Hydroxytoluene), Irganox 1098, Irganox 1076, Irganox 1010, or Irganox 3114, which is a first antioxidant that improves processing heat stability by removing radicals, and Irgafos 168 as a phosphite antioxidant, which is a second antioxidant that decomposes peroxide generated by the first antioxidant.

In one exemplary embodiment, the additive (D) may include sodium hypophosphite (Na₂H₂PO₂), which is a phosphorus-based thermal stabilizer.

There is no particular limitation on the method of preparing the copolymerized polyamide composition according to an embodiment of the present invention, and the method of preparing the polyamide composition known in the art to which the present invention pertains may be used as it is or after appropriate modification, and the resin components and compounds described above may be freely selected and mixed in any order without any particular order restrictions.

Specifically, for example, the copolymerized polyamide composition may be prepared in the form of pellets by melting and extruding the above-mentioned respective resins and additives in the required amounts at a temperature of 160°C to 230°C using a single-screw/twin-screw extruder.

Further, according to still another embodiment of the present invention, provided is a copolymerized polyamide molded article manufactured by molding the copolymerized polyamide or copolymerized polyamide composition of the present invention.

There is no particular limitation on the method of manufacturing the molded article from the copolymerized polyamide or copolymerized polyamide composition according to an embodiment of the present invention, and a method known in the art to which the present invention pertains may be used. For example, the copolymerized polyamide molded article may be manufactured by molding the copolymerized polyamide or copolymerized polyamide composition according to an embodiment of the present invention by a common method such as injection molding, extrusion molding, casting molding, blow molding, rotational molding, or film molding, etc.

The copolymerized polyamide molded article according to an embodiment of the present invention exhibits excellent mechanical properties, low temperature properties and gas barrier properties. Therefore, this copolymerized polyamide molded article may be usefully applied to automotive parts, environmental materials, tank liners such as hydrogen tank liners, containers, building materials, electrical and electronic parts, aerospace/aviation, drones, food and functional packaging, housings, and energy materials (batteries, wind power/solar power generation).

### [Detailed Description of the Embodiments]

### Example

### Example 1-1

340 g of sebacic acid was charged into a reactor equipped with a stirrer, and heated to 150°C while purging the inside of the reactor with nitrogen, thereby melting sebacic acid. While stirring the molten sebacic acid and distilling the vaporized components, 204 g of m-xylenediamine (m-XDA) was added dropwise over 2 hours using a dropping funnel, and the reaction mixture was allowed to react under stirring for 1 hour. The reaction product was washed with 2 liters of ethanol, filtered and dried to obtain a polyamide salt. A relative viscosity (sulfuric acid) of the obtained polyamide salt was 1.5.

160 g of the polyamide salt obtained above, 1,440 g of caprolactam, and 12.43 g of sodium hypophosphite (Na₂H₂PO₂) were placed in a reactor equipped with a stirrer, and heated to 240°C while purging the reactor with nitrogen, thereby melting the reaction mixture.

While maintaining the reactor pressure 4 bar or lower, the reaction mixture was heated to 260°C under stirring at a speed of 10 rpm or higher, and allowed to react for 3 hours. Subsequently, the reaction mixture was allowed to react at 260°C for 1 hour while maintaining the reactor pressure at 0.01 bar using a vacuum pump. After completion of the reaction, the inside of the reactor was purged with nitrogen and cooled to obtain a copolymerized polyamide. A relative viscosity (sulfuric acid) of the obtained copolymerized polyamide was 3.7.

### Example 1-2

A copolymerized polyamide was obtained in the same manner as in Example 1-1, except that 1,181 g of the polyamide salt obtained in Example 1-1 and 418 g of caprolactam were used. A relative viscosity (sulfuric acid) of the obtained copolymerized polyamide was 4.0.

### Comparative Example 1-1

A flask was maintained at 70°C under vacuum to remove moisture in the flask. After releasing the vacuum in the flask, 500 g of caprolactam (CL), 0.318 g of sodium hydride (NaH), and 18.85 g of ethylene bis-stearamide were added, and the temperature was raised to 165°C under vacuum. The reaction temperature was set at 240°C, and hydrogen gas generated when the above raw materials were melted was removed while introducing nitrogen gas. 2.30 g of toluene diisocyanate (TDI) was injected and reacted for 20 minutes. After 20 minutes, 50 ml of an aqueous formic acid solution (formic acid:distilled water = 1:1, v/v) was added to the flask to terminate the reaction, and 485 g of polymerized polyamide was obtained. A relative viscosity (sulfuric acid) of the obtained polyamide was 2.9.

### Experimental Example

Physical properties of the polyamide resins obtained in Examples and Comparative Example were measured by the following methods, and the results are shown in Table 1.

The relative viscosity of each polyamide resin or composition was measured at 25°C using UVS basic equipment from UFIT AG. In detail, 1 g of the resin or composition was dissolved in 100 ml of 96% H₂SO₄. The falling time was measured in a predetermined section in a viscometer. After measuring the falling time (t₀) of the H₂SO₄ standard solution and the falling time (t) of each sample, t/t₀ was obtained as the relative viscosity (RV) of the resin.

In addition, specimens were prepared by injecting each polyamide resin or composition, and tensile properties were measured by ISO 527 and impact properties by ISO 179/1eA method.

**[Table 1]**

| | Example 1-1 | Example 1-2 | Comparative Example 1-1 |
|---|---|---|---|
| Room-temperature tensile strength (MPa) | 90.3 | 68 | 37.3 |
| Room-temperature tensile modulus (MPa) | 3,153.1 | 2,615.1 | 2,230.0 |
| Room-temperature elongation at break (%) | 480.9 | 580.5 | 706.1 |
| Room-temperature impact strength (KJ/m²) | 7.1 | 8.0 | 6.5 |

### Example 2-1

To 10 g of the copolymerized polyamide obtained in Example 1-1, 72.5 g of polyamide (PA6, relative viscosity of 2.9) prepared from caprolactam, and 17.5 g of a maleic anhydride-grafted ethylene-butylene rubber (Mitsubishi Chemical, MH5020C), 0.1 g of Irganox 1098 as a first antioxidant, 0.5 g of Irgafos 168 as a second antioxidant, and 0.25 g of a phosphorus-based thermal stabilizer (NaH₂PO₂) were added, and then the mixture was extruded at 250°C using an extruder to prepare a copolymerized polyamide composition.

### Example 2-2

A copolymerized polyamide composition was prepared in the same manner as in Example 2-1, except that the copolymerized polyamide obtained in Example 1-2 and the polyamide prepared from caprolactam were used.

Physical properties of the copolymerized polyamide compositions obtained in the above Examples were measured by the above methods, and the results are shown in Table 2.

**[Table 2]**

| | Example 2-1 | Example 2-2 |
|---|---|---|
| Room-temperature tensile strength (MPa) | 55.7 | 45.1 |
| Room-temperature tensile modulus (MPa) | 2,218.4 | 2,035.9 |
| Room-temperature elongation at break (%) | 413.9 | 461.1 |
| Room-temperature impact strength (KJ/m²) | 63.2 | 74.0 |

### [Industrial Availability]

As confirmed in Tables 1 and 2, the copolymerized polyamide and the composition including the same according to an embodiment of the present invention have excellent mechanical properties such as tensile properties and impact resistance properties.

## Claims

1. A method of preparing a copolymerized polyamide, the method comprising the steps of (1) preparing a polyamide salt by condensation polymerization of diamine and dicarboxylic acid; and (2) copolymerizing the polyamide salt with lactam or α,ω-aminocarboxylic acid, wherein an equivalent ratio of diamine to dicarboxylic acid is 1.05 to 1.0, and a molar ratio of lactam or α,ω-aminocarboxylic acid to the polyamide salt is 96:4 to 50:50.

2. The method of claim 1, wherein in the step (1), the dicarboxylic acid includes one or more of an aliphatic dicarboxylic acid selected from the group consisting of oxalic acid, malonic acid, succinic acid, glutaric acid, adipic acid, pimelic acid, suberic acid, azelaic acid, sebacic acid, undecane diacid, dodecane diacid, tridecane diacid, tetradecane diacid, pentadecane diacid, hexadecane diacid, heptadecane diacid, and octadecane diacid; a cycloaliphatic dicarboxylic acid selected from the group consisting of cyclohexane dicarboxylic acids; and an aromatic dicarboxylic acid selected from the group consisting of phthalic acid, isophthalic acid, terephthalic acid, and naphthalene dicarboxylic acid.

3. The method of claim 1, wherein in the step (1), the diamine includes one or more of an aliphatic diamine selected from the group consisting of ethylenediamine, 1,3-diaminopropane, 1,4-diaminobutane, 1,5-diaminopentane, 1,6-diaminohexane, 1,7-diaminoheptane, 1,8-diaminooctane, 1,9-diaminononane, 1,10-diaminodecane, 1,11-diaminoundecane, 1,12-diaminododecane, 1,13-diaminotridecane, 1,14-diaminotetradecane, 1,15-diaminopentadecane, 1,16-diaminohexadecane, 1,17-diaminoheptadecane, 1,18-diaminooctadecane, 1,19-diaminononadecane, 1,20-diaminoicosane, and 2-methyl-1,5-diaminopentane; a cycloaliphatic diamine selected from the group consisting of cyclohexane diamine and bis-(4-aminocyclohexyl)methane; and an aromatic diamine such as xylene diamine.

4. The method of claim 1, wherein in the step (1), the dicarboxylic acid is sebacic acid, and the diamine is m-xylene diamine.

5. The method of claim 1, wherein the condensation polymerization of the step (1) is performed at a temperature of 160°C to 250°C for 1 hour to 3 hours.

6. The method of claim 1, wherein the polyamide salt obtained in the step (1) has a relative viscosity (sulfuric acid) of 1 to 2.

7. The method of claim 1, wherein in the step (2), the lactam includes one or more selected from the group consisting of laurolactam, caprolactam, piperidinone, pyrrolidone, enantolactam, capryllactam, propiolactam, valerolactam, heptanolactam, octanolactam, nonanolactam, decanolactam, undecanolactam, and dodecanolactam.

8. The method of claim 1, wherein in the step (2), the α,ω-aminocarboxylic acid includes one or more selected from the group consisting of aminocaproic acid, 7-aminoheptanoic acid, 11-aminoundecanoic acid, and 12-aminododecanoic acid.

9. The method of claim 1, wherein the copolymerization of the step (2) is performed in the presence of a phosphorus-based compound as a thermal stabilizer and catalyst.

10. The method of claim 9, wherein the phosphorus-based compound is a hypophosphorous acid compound or a phosphorous acid compound.

11. The method of claim 1, wherein the copolymerization of the step (2) includes a first copolymerization which is performed at a pressure of 1 bar to 5 bar and a temperature of 250°C to 300°C for 1 hour to 3 hours, and a second copolymerization which is performed at a pressure of 0.001 bar to 0.5 bar and a temperature of 200°C to 300°C for 0.1 hour to 12 hours.

12. A copolymerized polyamide prepared by the preparation method of any one of claims 1 to 11, the copolymerized polyamide comprising (a) a first structural unit derived from lactam or α,ω-aminocarboxylic acid; (b) a second structural unit derived from aromatic diamine or aromatic dicarboxylic acid; and (c) a third structural unit derived from an aliphatic or cycloaliphatic diamine having 10 or more carbon atoms or an aliphatic or cycloaliphatic dicarboxylic acid having 10 or more carbon atoms, wherein the content of the first structural unit is 50 mol% to 96 mol%, and the total content of the second structural unit and the third structural unit is 4 mol% to 50 mol%.

13. The copolymerized polyamide of claim 12, further comprising (d) a fourth structural unit derived from an aliphatic or cycloaliphatic diamine having 2 to 9 carbon atoms or an aliphatic or cycloaliphatic dicarboxylic acid having 2 to 9 carbon atoms.

14. The copolymerized polyamide of claim 12, wherein the copolymerized polyamide has a relative viscosity (sulfuric acid) of 2.0 to 5.0.

15. A copolymerized polyamide composition comprising (A) 4% by weight to 50% by weight of the copolymerized polyamide of claim 12; (B) 50% by weight to 96% by weight of homopolyamide prepared from lactam or α,ω-aminocarboxylic acid; and (C) 0% by weight to 20% by weight of an impact modifier.

16. The copolymerized polyamide composition of claim 15, wherein the impact modifier (C) includes one or more selected from the group consisting of maleic anhydride-grafted ethylene-propylene rubber, ethylene-1-butene rubber, ethylene-butylene rubber, ethylene-1-pentene rubber, ethylene-1-hexene rubber, ethylene-1-heptene rubber, ethylene-1-octene rubber, and ethylene-4-methyl-1-pentene rubber.

17. The copolymerized polyamide composition of claim 15, further comprising an additive (D) in an amount of 3 parts by weight or less with respect to 100 parts by weight of the components (A) to (C).

18. The copolymerized polyamide composition of claim 17, wherein the additive (D) includes one or more selected from the group consisting of an antioxidant, a thermal stabilizer, a neutralizer, a weathering stabilizer, an antistatic agent, a lubricant, a slip agent, a pigment, and a dye.

19. The copolymerized polyamide composition of claim 18, wherein the additive (D) includes a phenolic antioxidant, butylated hydroxytoluene (BHT), a first antioxidant selected from Irganox 1098, Irganox 1076, Irganox 1010, and Irganox 3114, a second antioxidant Irgafos 168, and a thermal stabilizer sodium hypophosphite (Na₂H₂PO₂).

20. A copolymerized polyamide molded article which is manufactured by molding the copolymerized polyamide of claim 12 or the copolymerized polyamide composition of claim 15.

21. The copolymerized polyamide molded article of claim 20, wherein the copolymerized polyamide molded article is for automotive parts, environmental materials, tank liners, containers, building materials, electrical and electronic parts, aerospace/aviation, drones, foods and functional packaging, housings, and energy materials.
